# EUROPEAN PATENT APPLICATION

(11) **EP 4 471 731 A1**
(43) Date of publication of application: **04.12.2024**
(21) Application number: 23176060.4
(22) Date of filing: 30.05.2023
(51) Int. Cl.: G06V 10/82

(54) **LABELLING A MEDICAL IMAGE**

(71) Applicant: Siemens Healthineers AG, 91301 Forchheim (DE)
(72) Inventor: Shaikh, Basheer Ismail, 560100 Bangalore (IN); Munavalli, Basavaraj, 560100 Bangalore (IN)
(74) Representative: Siemens Healthineers Patent Attorneys

(57) **Abstract**

A method for labelling a medical image, comprising image data of an anatomic area, the method comprising the following steps: applying a first trained neural network to the medical image to determine image coordinates of at least two bounding boxes (21, 22, 23) defining different predefined regions of the anatomic area; generating partial images, each partial image comprising image data of the medical image from within one of the bounding boxes (21, 22, 23); applying a different further trained neural network to each partial image in order to generate labelled partial images; based on the image coordinates of the bounding boxes (21, 22, 23), combining the labelled partial images to generate a combined labelled image of the anatomic area.

## Description

The invention relates to a method for labelling a medical image comprising image data of an anatomic area, as well as a corresponding computer program and a corresponding image processing device.

The annotation and labelling, e.g. color coding, of anatomic areas on medical images can be a time-consuming process. A rather complex example of an anatomic area is the cerebral arterial circle, also known as circle of Willis (COW). Often, the cerebral arterial circle is imaged by either or both of two image modalities, namely via a computed tomography (CT) angiogram of a brain scan or via performing a magnetic resonance (MR) time-of-flight (TOF) sequence. The cerebral arterial circle comprises cerebral arteries and a continuity of vessels to the brain. The CT Angiogram of Brain scan is typically performed for visualizing cerebral arteries and a COW view of cerebral arteries followed by reconstruction and post processing of the raw images. The MR TOF sequence is typically performed to visualize COW cerebral arteries in multiple angles using rotation. Due to the complexity of the cerebral arterial circle, annotating and labelling the entire cerebral arterial circle can be particularly time-consuming and tedious for a medical and/or technical expert, such as a radiological technologist or radiologist. Furthermore, there is a plurality of potential problems within cerebral arterial circle that are to be diagnosed. These problems may comprise abnormalities, such as occlusion or aneurism. The diagnosis of problems can be even more time-consuming than the general labelling of the cerebral arterial circle. The above two types of scans, i.e. CT angiogram of the brain and MR TOF sequence, are typically manually analyzed for abnormalities such as deformities, which typically requires lots of imaging interaction (e.g. rotate, punch, filter change, region growing etc.). Sometimes both modality images need to be co-related to come up with accurate annotation and diagnosis of problems. Hence, because the task of annotating, labelling and diagnosing can be particularly time-consuming, this can lead to an overall increased reading time for detection of problems and, therefore, delayed diagnosis. Accordingly, overall throughput in medical facilities concerning diagnosis and reporting of problems can be rather low and ultimately such delay may cause harm to patients in critical conditions.

It is therefore an object of the invention to provide a means for enabling an improvement in the throughput and/or a reduction in required time in the analysis of medical images of an anatomic area, in particular of the cerebral arterial circle.

This object is met or exceeded by a method according to claim 1, a method according to claim 11, a method according to claim 12, a computer program according to claim 14 and an image processing device according to claim 15. Further features and advantages can be found in the dependent claims, the description, and the attached figures.

According to a first aspect of the invention, a method for labelling a medical image, in particular a 3D reconstructed image, comprising image data of an anatomic area is provided. The method comprises the following steps:
(a) applying a first trained neural network to the medical image to determine image coordinates of at least two, preferably three, bounding boxes defining different predefined regions of the anatomic area;
(b) generating partial images, each partial image comprising image data of the medical image from within one of the bounding boxes;
(c) applying a different further trained neural network to each partial image in order to generate labelled partial images;
(d) based on the image coordinates of the bounding boxes, combining the labelled partial images to generate a combined labelled image of the anatomic area.

Labelling may in particular comprise annotating, such as naming or commenting, and/or marking objects within the anatomic area. Preferably, the neural networks are specifically trained for a specific anatomic area. Hence, specialized trained neural networks may preferably be applied for labelling the medical image. The first trained neural network and/or the further trained neural networks may preferably be trained convolutional neural networks. The anatomic area may generally be any anatomic area that may be separated into partial areas. The anatomic area may be a two-dimensional area or a three-dimensional area. Correspondingly, the predefined regions and the bounding boxes may be two-dimensional or three-dimensional. It has been found that the inventive method may be particularly advantageous when applied to the anatomic area being the cerebral arterial circle, since the cerebral arterial circle can be particularly cumbersome and/or difficult to label. In particular, the cerebral arterial circle comprises twelve major cranial arteries and their corresponding pathways to the brain. Hence, it can be a lot of work to label all relevant parts of the cerebral arterial circle. The medical image may be a two-dimensional or a three-dimensional medial image. In a preferred embodiment, the medical image is a visualization of the cerebral arterial circle based on a computed tomography angiogram of a brain scan or based on a magnetic resonance time-of-flight sequence. Furthermore, the complex structure of the cerebral arterial circle may lead to mistakes when manually labelling this structure. On the other hand, it has been found that the inventive method can produce reliable results in automatically labelling this particular area, in particular since the separating in areas via the bounding boxes can be applied efficiently to the particular anatomic geometry of the cerebral arterial circle. The image coordinates of the bounding boxes may comprise coordinates determining the size of the bounding boxes, e.g. via defining the corner points of the bounding boxes. The image coordinates of the bounding boxes may in particular be image coordinates defining two or three orientations or axial positions. The different regions defined by the bounding boxes are in particular predefined via the training of the corresponding neural network. Hence, the trained neural network is preferably specifically trained to output these particular regions of the anatomic area. Advantageously, by separating the anatomic area via the bounding boxes into partial images, the further trained neural networks can be more specialized and only have to recognize and label the corresponding partial images instead of having to process the complete medical image. Correspondingly, the method may be more reliable and robust than it would be without the bounding boxes, e.g. by directly labelling the whole medical image via only one trained neural network. Accordingly, one further trained neural network may be applied for each bounding box, each bounding box defining a partial image. For example, if there are three bounding boxes, three further trained neural networks may be applied. Preferably, each further trained neural network is specifically trained to process the corresponding predefined region. Advantageously, the labelled partial images may be combined in the end, thus allowing to generate a complete labelled medical image. This last step may in particular benefit from the fact that the coordinates of the bounding boxes are already determined and can thus be used to fuse the partial images back together. It has been found, that overall, the processing of the labelling of an anatomic area can be carried quickly with this method, thereby advantageously increasing a system throughput in a medical facility. Furthermore, the method has turned out to be particularly reliable and robust, thus allowing to reduce the occurrence of errors, that may otherwise arise due to human errors or when operating without the bounding boxes.

According to an embodiment, the different further neural networks are three-layered convolutional neural networks (CNNs). It has been found that three-layered CNNs can be on the one hand sufficiently robust and on the other hand sufficiently fast for the purpose of this method.

According to an embodiment, the anatomic area is the cerebral arterial circle and the three predefined regions are the posterior inferior section, the basilar artery and its branches, and the anterior and middle circulation of the cerebral arterial circle. The cerebral arterial circle is also commonly referred to as "circle of Willis". Hence a first further trained neural network may be specifically trained to label the posterior inferior section, a second further trained neural network may be specifically trained to label the basilar artery and its branches, and a third further trained neural network may be specifically trained to label the anterior and middle circulation of the cerebral arterial circle. The posterior inferior section consists in particular of the vertebral artery, the posterior spinal artery, the posterior inferior cerebral artery, and the anterior spinal artery. The basilar artery and its branches consist in particular of the basilar artery, the anterior inferior cerebellar artery, the labyrinthine artery, the pontine branches, the superior cerebellar artery, and the posterior cerebral artery. The anterior and middle circulation of the cerebral arterial circle consists in particular of the bilateral anterior cerebral arteries (bilateral ACA), the bilateral middle cerebral arteries (bilateral MCA), the anterior communicating artery (Aco-mA), and the bilateral posterior communicating artery (bilateral PComA). For example, the anterior and middle circulation of the cerebral arterial circle may be defined via a first bounding box, the basilar artery and its branches may be defined via a second bounding box, and the posterior inferior section may be defined via a third bounding box. Advantageously, it has been found that defining bounding boxes for these particular regions can lead to a particularly robust labelling of the anatomic structure in the cerebral arterial circle.

According to an embodiment, the medical image is an MIP (maximum intensity projection) or VRT (volume rendering technique) image, wherein the first neural network is trained to be applied to an MIP or VRT image. MIT or VRT are in particular useful for providing good medial image data of the cerebral arterial circle.

According to an embodiment, the medical image is a visualization of the cerebral arterial circle based on a computed tomography angiogram of a brain scan or based on a magnetic resonance time-of-flight sequence. Advantageously, these image modalities may be particularly well-suited for imaging the cerebral arterial circle. Further, it has been found that the method described herein can work well and reliably with medical images taken via these image modalities.

According to an embodiment, the output of the different further trained neural networks is a label for the corresponding partial image data, wherein the label is applied to the partial image data to generate the labelled partial images. The label may comprise annotations. Additionally and/or alternatively, the label may comprise markings of one or several anatomical structures, e.g. of organs or of parts of organs. The label may comprise image coordinates of the annotations and/or of the markings, in particular describing a position of the annotations and/or of the markings on the partial images. The label may be applied to the partial image based on the image coordinates, in particular by placing the annotations and/or markings on the partial image according to the image coordinates. Hence, the further trained neural networks may preferably be trained to each generate a label based on the input partial image data. For example, if there are three bounding boxes, there may be three labels generated by three further trained neural networks. Each label may be applied to the corresponding partial image data via a label application algorithm.

According to an embodiment, the method comprises a further step of searching at least one of the labelled partial images or the combined labelled image for abnormalities via an algorithm and labelling the abnormalities when detected by the algorithm. Abnormalities may in particular be signs of a disease or of an injury. The algorithm may be or comprise another trained neural network, in particular trained convolutional neural network. According to an embodiment, the different further neural networks may be trained to detect and label abnormalities and at least some of the abnormalities may be detected and labelled via the different further neural networks. Hence, the detecting of abnormalities may at least partially be done via the further neural networks that are already labelling the partial images. Therefore, fewer overall neural networks may be needed. However, it may be advantageous to use another, more specialized, algorithm, e.g. neural network, for finding an abnormality. There may be different algorithms applied to look for different abnormalities. Preferably, a specialized algorithm may be applied for each type of abnormality that is searched for. Advantageously, a greater accuracy of finding abnormalities may be achieved by training and using disease specific neural networks, i.e. rather than using one neural network for the entire COW. Individual specialized algorithms may be applied to the combined labelled image or to the labelled partial images depending on the usual position of the corresponding abnormality. For example, if an abnormality is usually only situated within the region of one of the partial images, only the corresponding partial labelled image may be used for searching the abnormality. For example, if an abnormality is usually situated within several regions of multiple of the partial images, the combined labelled image may be used for searching the abnormality. The algorithm(s) may be configured to base the search for abnormalities also on the labelling of the labelled partial images or the combined labelled image. Abnormalities in the cerebral arterial circle may, for example, comprise one or several of the following: Intracranial aneurysms, hypoplasia, ischemic stroke, moyamoya disease, and aplasia development disorder. A labelled image of the anatomic area comprising labelled abnormalities may be output as a result of the method. Optionally, the method may comprise a further step of providing an auto diagnosis suggestion of the occurrence of potential abnormalities. Advantageously, an auto diagnosis suggestion may help a physician or a technician, such as a radiologist, to achieve a quicker decision making.

According to an embodiment, abnormalities in the form of intracranial aneurysms are searched for and labelled via a trained convolutional neural network (CNN). Intracranial aneurysms may comprise one or several of the following: saccular aneurysm & Berry (i.e., a collection of saccular) aneurysm, fusiform aneurysm, dissecting aneurysm, mycotic aneurysm. The CNN may be trained via training data comprising normal data as well as data comprising abnormal aneurysms. The CNN may be trained based on images of the vessels in a longitudinal view and/or in a section view. A longitudinal view may in particular a view looking in a direction perpendicular to a direction of blood flow through the vessel. A section view may in particular be a cross-sectional view of the vessel, i.e. a view in the direction of the blood flow.

According to an embodiment, an abnormality in the form of hypoplasia is searched for by a diameter check tool that detects places where a diameter of organs, in particular of blood vessels such as arteries, is below a predefined threshold. Hypoplasia is in particular the narrowing down of the arterial diameter in the cerebral arterial circle. A predefined threshold may for example be in the region of 0.1mm to 1mm, preferably 0.4. to 0.6mm, for example 0.5mm. Hence, for example, the places where the diameter of the arteries has fallen below the threshold of 0.5mm may be marked. The diameter check tool may be configured to make an exception for communicating arteries, allowing lower diameters for the communicating arteries. It has been found that no complex AI algorithm is required, but a simple diameter check tool may be enough for this kind of abnormality detection. The diameter check tool may be configured to carry out a peace wise analysis of the entire cerebral arterial circle, that has in particular been labelled in a previous step. A piece wise analysis is in particular an analysis where the organs, in particular blood vessel are checked for their diameter at each part of their course.

According to an embodiment, an abnormality in the form of an ischemic stroke is searched for by a comparing algorithm that compares a blood flow derived from the image data with an expected blood flow, wherein, optionally, a trained convolutional network (CNN) is applied to a region where an unexpectedly low blood flow has been detected by the comparing algorithm in order to determine whether there is a blood clot. For example, a blood flow image study may be done based on a contrast study via computed tomography and/or via a magnetic resonance enhanced artery image using time-of-flight (TOF). A database of expected blood flow volumes in one or several, preferably all, regions of the cerebral arterial circle may be used for the comparison. The database may comprise data for a plurality of age groups of patients. The comparison may be carried out based on an age of the patient the medical image of the cerebral arterial circle is taken from. The algorithm may comprise carrying out a similar patient search based on patient information, such as age, sex, weight and comparing the blood flow derived from the image data to a blood flow from the database of a similar patient. For the similar patient search, the algorithm may look for patient information in the database that is most similar to the patient information of the patient the medical image is taken from. The algorithm may be configured to recognize an unexpectedly low blood flow based on comparison blood flow from the database, e.g. by when the blood flow derived from the image data is at least a predefined amount below an expected blood flow. A predefined amount may for example be such that the blood flow is at less than 60 to 90 percent, preferably less than 70 to 80 percent, particularly preferably less than 72 to 75 percent, of the expected blood flow. For example, the expected normal flow rate of a healthy adult at rest may be about 55ml per minute. In the case of an ischemic stroke, it may go to a level of about 40ml per minute, i.e. about 72% of the expected blood flow. This flow rate may increase significantly during periods of increased brain activity or in response to changes in blood pressure or other physiological factors. Hence, the predefined amount may be adapted according to the circumstances. The reduced blood flow may already be a useful indicator for a potential blood clot. However, it has been found that the combination of the comparing algorithm based on an expected blood flow and applying a CNN to the image information of the suspected region can be particularly efficient for helping to diagnose an ischemic stroke.

According to an embodiment, an abnormality in the form of a moyamoya disease is searched for by virtually dissecting the cerebral arterial circle and projecting the cross section on a 2D plane, wherein a trained convolutional neural network (CNN) is applied to the projected cross section in order to detect a moyamoya disease. The virtually dissecting of the cerebral arterial circle may be done analogously to the existing virtual dissection algorithm known from colonoscopy. In particular, the CNN is trained to differentiate between a normal cross section and a moyamoya cross section of a virtually dissected image.

According to an embodiment, an abnormality in the form of aplasia development disorder is searched for by applying a region growing algorithm on segmentation values of tissue in the cerebral arterial circle that is searching for discontinuities and/or circuit breaks. Accordingly, any discontinuity and/or circuit break may be labelled, in particular marked and annotated.

According to a further aspect of the invention, a method for training a neural network is provided. The method comprises the following steps:
(a) providing a training database comprising medical images of an anatomic area with and without bounding boxes defining different predefined regions of the anatomic area;
(b) training the neural network with the training database generate corresponding bounding boxes on medical images via supervised learning.

All features and advantages of the method for labelling a medical image may be adapted to the methods for training a neural network (i.e., this method and the following methods) and vice versa. The training database may be based on manually defined bounding boxes, e.g. manually defined by radiologists. The training database may preferably comprise image information from computed tomography Angio and/or magnetic resonance time-of-flight scans. The training database may preferably comprise data from different age groups. Preferably the neural network to be trained may be a convolutional neural network (CNN). Training the neural network may be done via supervised learning. The neural network may be trained with 70% to 90%, preferably 75 to 85% of the available data, while the remaining data may be used for validation of the trained neural network. This split of available data has been found to be particularly useful.

According to a further aspect of the invention, another method for training a neural network is provided. The method comprises the following steps:
(a) providing a training database comprising partial medical images of a region of an anatomic area with and without labels;
(b) training the neural network with the training database to generate corresponding labels within the region of the anatomic area.

All features and advantages of the method for labelling a medical image may be adapted to the methods for training a neural network and vice versa. This training method may be applied for different neural networks for each of the partial images that are to be determined in the method for labelling a medical image. Preferably, the neural network to be trained may be a convolutional neural network (CNN). Preferably, the CNN may be three-layered. A three-layered CNN may advantageously provide particularly good feature extraction of complex anatomic areas, such as the cerebral arterial circle. The partial medical images of the training database may be based on existing labelled anatomical areas that have, for example, been labelled manually by radiologists. The training may be done via supervised learning. The neural network may be trained with 70% to 90%, preferably 75 to 85% of the available data, while the remaining data may be used for validation of the trained neural network. This split of available data has been found to be particularly useful. The training database may comprise data from different age groups. The training database may preferably comprise image information from computed tomography Angio and/or magnetic resonance time-of-flight scans.

According to another aspect of the invention, a method for training a neural network is provided. The method comprises the following steps:
(a) providing a training database comprising medical images or partial medical images of a region of an anatomic area with abnormalities, the training database comprising medical images or partial medical images with and without labels concerning the abnormalities;
(b) training the neural network with the training database to identify the abnormalities and/or generate corresponding labels for the abnormalities within the region of the anatomic area. Preferably, one neural network may be trained to generally label the anatomic area (but excluding a labelling of the abnormalities), while another neural network, preferably a CNN, may be trained to learn the labelling of the abnormalities. In this context the input training data may, for example, comprise the general labelling of the anatomic area but not the labelling of the abnormalities. Hence labels according to this embodiment are labels that are labelling abnormalities.

According to a further aspect of the invention, a computer program comprising instructions which, when the program is executed by a computer cause the computer to carry out the steps of one of the methods as described herein. All features and advantages of the method for labelling a medical image and the methods for training a neural network may be adapted to the computer program and vice versa.

According to a further aspect of the invention, an image processing device for labelling a medical image comprising image data of an anatomic area is provided. The image processing device is configured to consecutively apply a plurality of trained neural networks to the image data in order to generate a labelled image of the anatomic area, in particular by applying the method for labelling a medical image as described herein. All features and advantages of the method for labelling a medical image, the methods for training a neural network, and the computer program may be adapted to the image processing device and vice versa. The image processing device may be configured to provide an auto diagnosis suggestion to a user, such as a radiologist. The auto diagnosis suggestion may be based on the finding of abnormalities, in particular according to the method as described herein. Advantageously, the auto diagnosis suggestion may provide help to the user in making quicker and/or better informed (medical) decisions. The image processing device may be or may comprise a computer or part of a computer. The computer may be a PC, a server, and/or a control unit of a computed tomography (CT) system. The computer may also be a mobile device, such as a laptop, tablet computer or mobile phone. The image processing device may in particular comprise a dedicated workflow engine, e.g., comprising a computer program, such as the computer program described herein, configured to carry out the corresponding method steps.

The embodiments described herein may be combined with each other unless indicated otherwise.

The accompanying drawings illustrate various exemplary embodiments and methods of various aspects of the invention.
Fig. 1 shows a flow diagram of a method for labelling a medical image with an anatomic area according to an embodiment of the invention;
Fig. 2 shows a schematic of a first convolutional neural network according to an embodiment of the invention;
Fig. 3 shows a medical image of the cerebral arterial circle with three bounding boxes according to an embodiment of the invention;
Fig. 4 shows a labelled partial image of the anterior and middle circulation of the cerebral arterial circle according to an embodiment of the invention;
Fig. 5 shows a labelled partial image of basilar artery and its branches according to an embodiment of the invention;
Fig. 6 shows a labelled partial image of the posterior inferior section according to an embodiment of the invention;
Fig. 7 shows a combined labelled image of the cerebral arterial circle according to an embodiment of the invention;
Fig. 8 shows a flow diagram of a method for labelling a medical image according to an embodiment of the invention;
Fig. 9 shows a diagram representing a method for labelling a medical image having an anatomic area;
Fig. 10 shows different types of aneurysms;
Fig. 11 shows a medical image of the cerebral arterial circle with an instance of hypoplasia;
Fig. 12 shows an example of an abnormality in the form of a moyamoya disease;
Fig. 13 shows different types of Aplasia development disorder in the cerebral arterial circle;
Fig. 14 shows a labelled medical image with several aneurysm abnormalities;
Fig. 15 shows a method for training a neural network according to an embodiment of the invention;
Fig. 16 shows another method for training a neural network according to an embodiment of the invention;
Fig. 17 shows another method for training a neural network according to an embodiment of the invention;
Fig. 18 shows an image processing device for labelling a medical image according to an embodiment of the invention,
Fig. 19 shows a medical image of the cerebral arterial circle that may be input into a first trained neural network according to an embodiment of the invention; and
Fig. 20 shows a labelled medical image corresponding to the medical image of fig.19 as labelled by a method according to the invention.

Similar elements are designated with the same reference signs in the drawings.

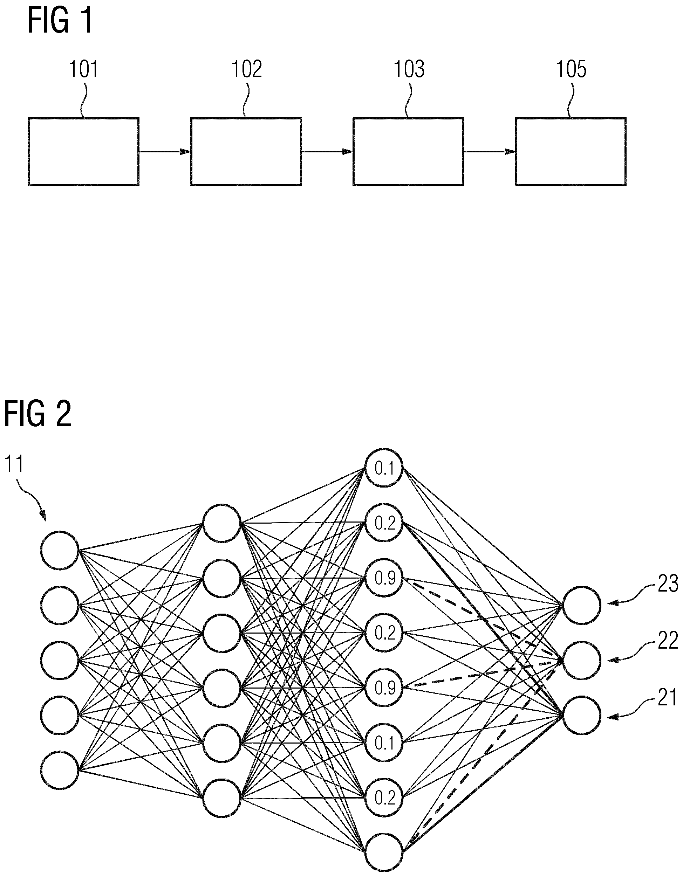

Figure 1 shows a flow diagram of a method for labelling a medical image with an anatomic area according to an embodiment of the invention. The anatomic area may in particular be the cerebral arterial circle. In a first step 101, a first trained neural network is applied to the medical image. Preferably, the first trained neural network may be a convolutional neural network. The first trained neural network determines coordinates of at least two, for example of three, bounding boxes that define predefined regions of the anatomic area. For example, in the case of the cerebral arterial circle, the predefined regions may be the posterior inferior section, the basilar artery and its branches, and the anterior and middle circulation of the cerebral arterial circle. In a further step 102, partial images are generated based on the bounding boxes. Each partial image comprises image data of the medical image from within one of the bounding boxes. In a further step 103, a different further trained neural network is applied to each partial image. Hence, one trained neural network is applied to each partial image. Preferably, the different further neural networks may be convolutional neural networks, in particular three-layered convolutional neural networks. Via the further trained neural networks, labelled partial images are generated. Therein, preferably, the further trained neural networks each generate and output a label for the corresponding partial image data, and the labels are then applied to the corresponding partial image data. In a further step 105, a combined labelled image of the anatomic area is generated by combining the labelled partial images. For this combining, the image coordinates of the bounding boxes are used.

Figure 2 shows a schematic of a first convolutional neural network (CNN) according to an embodiment of the invention. The CNN is trained to receive image data of an anatomic area, in particular of the cerebral arterial circle, as input 11 and to output a first bounding box 21, a second bounding box 22, and a third bounding box 23. Each bounding box defines a different predefined region of the anatomic area. For example, if the anatomic area is the cerebral arterial circle, the first bounding box 21 may define the anterior and middle circulation of the cerebral arterial circle, the second bounding box 22 may define the basilar artery and its branches, and the third bounding box 23 may define the posterior inferior section.

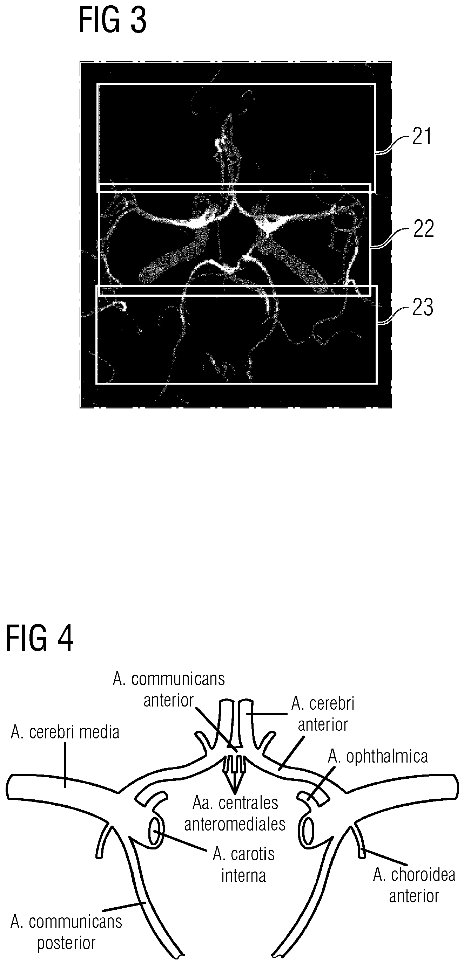

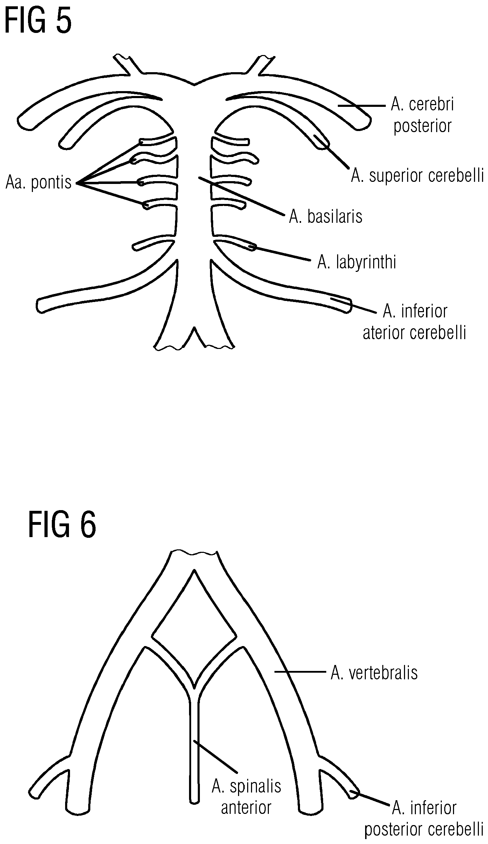

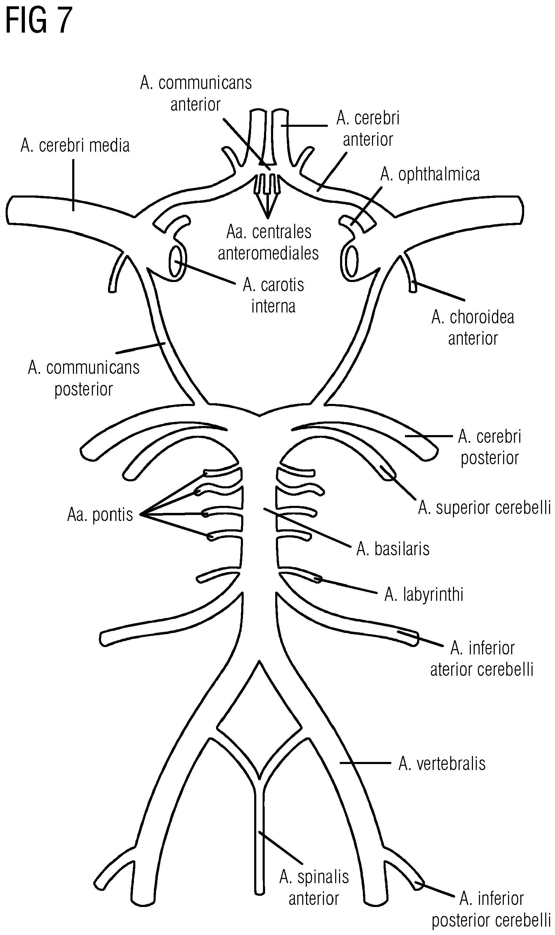

Figure 3 shows a medical image of the cerebral arterial circle representing three-dimensional (3D) image data of the cerebral arterial circle. On the medical image, there are a first bounding box 21 defining the anterior and middle circulation of the cerebral arterial circle, a second bounding box 22 defining the basilar artery and its branches, and a third bounding box 23 defining the posterior inferior section. The bounding boxes are in particular the output of a first trained neural network, such as the trained CNN of figure 2. In this embodiment, the rectangles of the bounding boxes represent the (2D) rectangular cross-section of (3D) cuboid bounding boxes that define three-dimensional (3D) partial images within the medical image of the cerebral arterial circle. The partial images are then input into further trained neural networks, in particular further trained CNNs. The further trained neural networks generate a labelling for the partial images. Corresponding labelled partial images are shown in Figure 4 to 6. Figure 4 shows a schematic of a labelled partial image of the anterior and middle circulation of the cerebral arterial circle. Figure 5 shows a schematic of a labelled partial image of basilar artery and its branches. Figure 6 shows a schematic of a labelled partial image of the posterior inferior section. In these images, the labelling are annotations in text form naming the organs. According to an embodiment of the method for labelling a medical image, the labelled partial images are then combined in order to generate a combined labelled image of the cerebral arterial circle. A corresponding combined labelled image of the cerebral arterial circle is shown in figure 7.

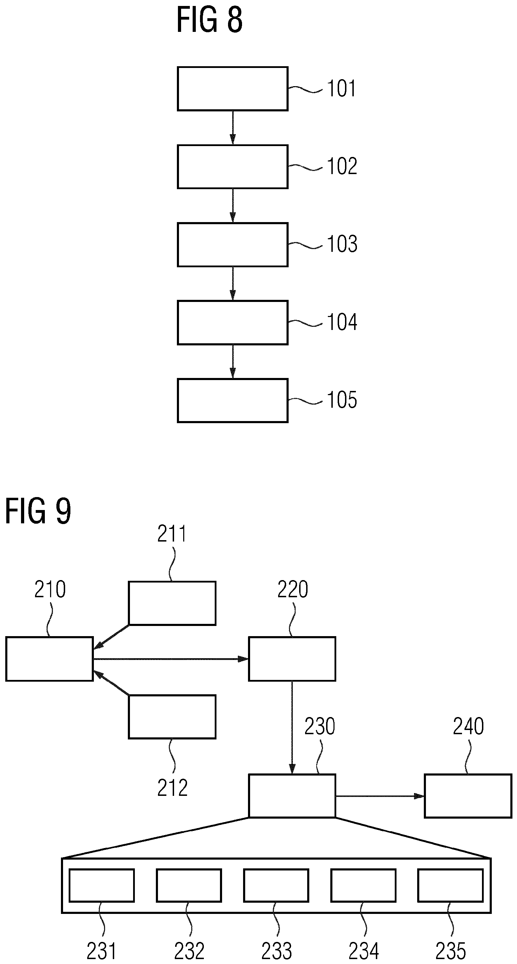

Figure 8 shows a flow diagram of a method for labelling a medical image according to an embodiment of the invention. The method steps 101, 102, 103, and 105 correspond to the method as shown in figure 1. However, in this embodiment, an additional step 104 of searching at least one of the labelled partial images or the combined labelled image for abnormalities via an algorithm and labelling the abnormalities when detected by the algorithm is added. For example, an abnormality in the form of an ischemic stroke is searched for by a comparing algorithm that compares a blood flow derived from the image data with an expected blood flow. Further, optionally, a trained convolutional network may be applied to a region, where an unexpectedly low blood flow has been detected by the comparing algorithm in order to determine whether there is a blood clot. A plurality of algorithms may be applied, in particular in order to search for different types of abnormalities. The additional step 104 is preferably carried out after the step 103 of applying a different further trained neural network to each partial image and generating labelled partial images. The additional step 104 may be carried before (as shown here) or after the step 105 of combining the labelled partial images.

Figure 9 shows a diagram representing a method for labelling a medical image having an anatomic area. Therein a trained algorithm comprising a plurality of trained neural networks is created by using a training database 211 and supervised learning 212. After the training, the trained algorithm may be applied to image data of an anatomic area 210. The trained algorithm outputs combined labelled image of the anatomic area 220. The application 210 of the outputting 220 of the algorithm may, for example, be carried out according to the method described in figure 1. Thereafter, in a further step 230, another algorithm, i.e. an abnormality detector, is applied to the combined labelled image. The algorithm may comprise several sub-algorithms 231-235 each detecting different types of abnormalities. For example, a first sub-algorithm 231 may be configured to detect intracranial aneurysms via a trained neural network. A second sub-algorithm 232 may be configured to detect hypoplasia using an arterial diameter detector. A third sub-algorithm 233 may be configured to detect ischemic strokes using expected blood flow data and further applying a trained convolutional network when a significant difference in blood flow is detected in order to detect blood clots. A fourth sub-algorithm 234 may be configured to detect a moyamoya disease using a virtual dissection and a trained convolutional neural network. A fifth sub-algorithm 235 may be configured to detect aplasia using segmentation region growing. In a final step 240, the medical image is output comprising the labelling of the anatomic area as well as a labelling and/or a notification of detected abnormalities.

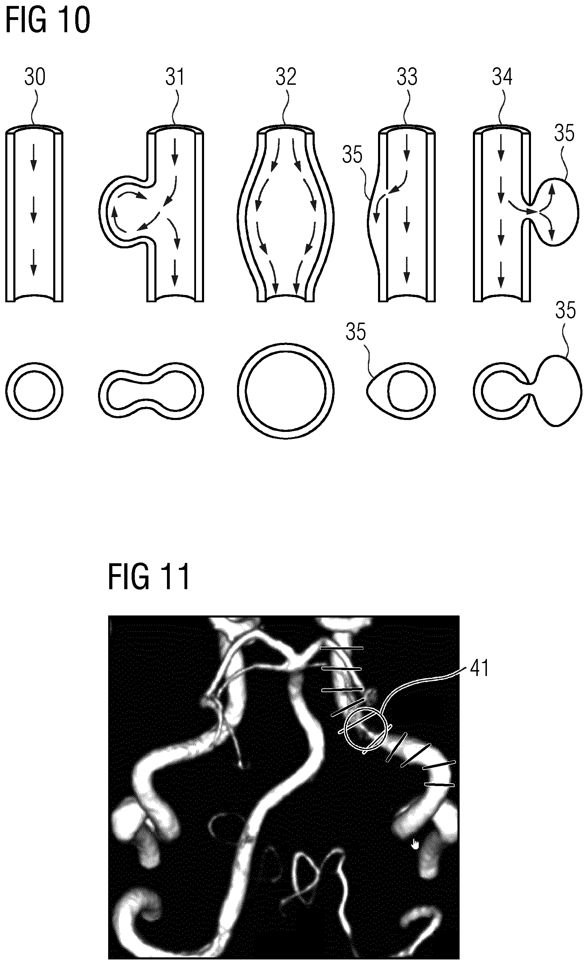

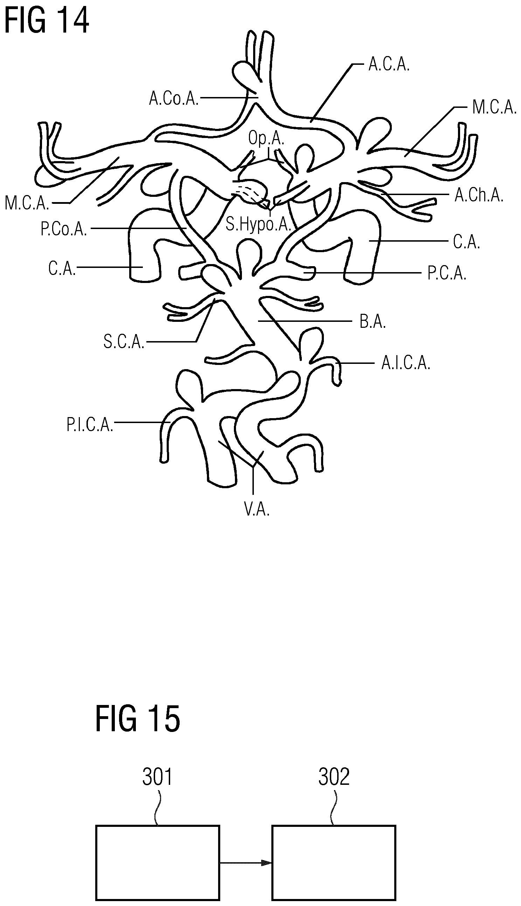

Figure 10, shows different types of aneurysms in longitudinal view (top) and in horizontal section view (bottom). On the left 30, a healthy vessel is shown. The second column 31 and third column 32 show true aneurysms, namely a saccular aneurysm 31 and a fusiform aneurysm 32. The fourth column 33 shows a dissection aneurysm, having an extravascular of blood 35 on the side. On the right 34, there is shown a so-called false aneurysm with an extravascular of blood 35 in the form of extravascular connective tissue. Figure 14 shows a labelled medical image with several aneurysm abnormalities. Therein the labelling comprises short annotations in text form.

Figure 11 shows a medical image of the cerebral arterial circle, where via a diameter check tool an instance of hypoplasia 41 is detected. Hence a diameter of the vessels is below a predefined threshold compared to reference data.

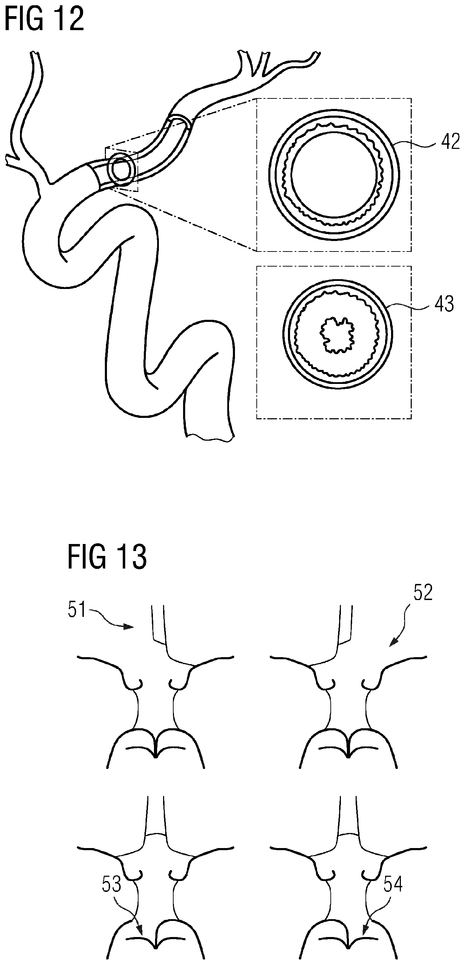

Figure 12 shows an example of an abnormality in the form of a moyamoya disease. Therein a normal cross section of a brain artery 42 as well as a constricted cross section of a brain artery 43 with moyamoya disease is shown. The moyamoya disease may be searched for by virtually dissecting the arteries, in particular of the cerebral arterial circle, and projecting the cross section on a 2D plane, e.g. as shown here with the healthy cross section 42 and the diseased cross section 43. Preferably, a trained convolutional neural network is applied to the projected cross section in order to detect a moyamoya disease.

Figure 13 shows different types of Aplasia development disorder in the cerebral arterial circle, namely Right A1 Aplasia 51, Left A1 Aplasia 52, Right P1 Aplasia 53, and Left P1 Aplasia 54. This abnormality may be searched for by applying a region growing algorithm on segmentation values of tissue in the cerebral arterial circle that is searching for discontinuities and/or circuit breaks.

Figure 15 shows a method for training a neural network according to an embodiment of the invention. The method comprises a first step 301 of providing a training database comprising medical images of an anatomic area with and without bounding boxes defining different predefined regions of the anatomic area. The method further comprises another step 302 of training the neural network with the training database generate corresponding bounding boxes on medical images via supervised learning.

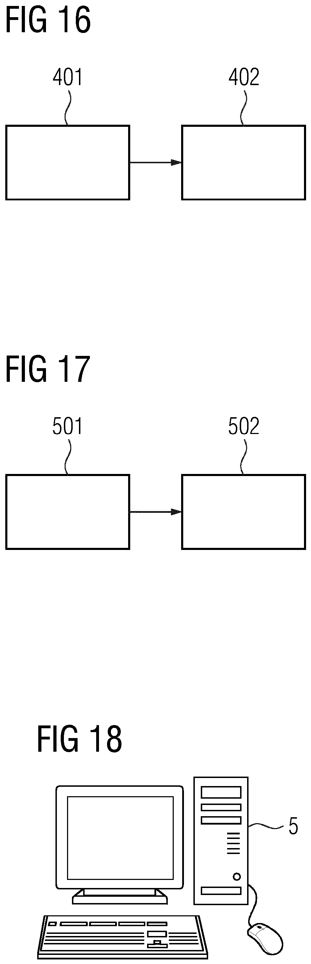

Figure 16 shows a method for training a neural network according to an embodiment of the invention. The method comprises a first step 401 of providing a training database comprising partial medical images of a region of an anatomic area with and without labels. The method further comprises another step 402 of training the neural network with the training database to generate corresponding labels within the region of the anatomic area.

Figure 17 shows a method for training a neural network according to an embodiment of the invention. The method comprises a first step 501 of providing a training database comprising medical images or partial medical images of a region of an anatomic area with and without labels concerning abnormalities. The method further comprises another step 502 of training the neural network with the training database to generate corresponding labels of the abnormalities within the region of the anatomic area.

Figure 18 shows an image processing device 5 for labelling a medical image according to an embodiment of the invention. The image processing device is configured to consecutively apply a plurality of trained neural networks to the image data in order to generate a labelled image of the anatomic area. In particular, the image processing device may be configured to apply the method for labelling a medical image as described herein.

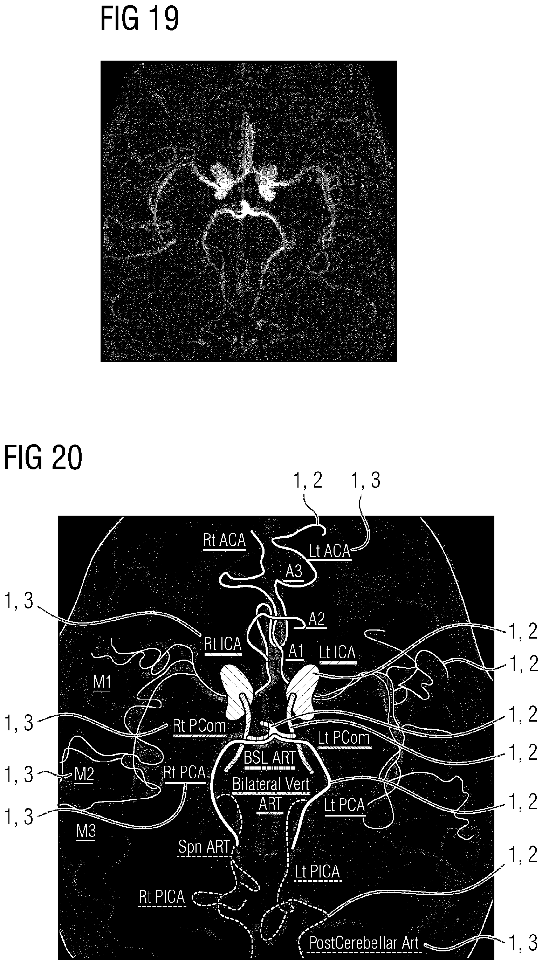

Figures 19 shows a medical image of the cerebral arterial circle that may be input into a first trained neural network according to an embodiment of the invention. Figure 20 shows a corresponding labelled medical image as labelled by a method according to the invention. The labelling 1 comprises annotations 3 and markings 2 of several parts of the cerebral arterial circle.

Independent of the grammatical term usage, individuals with male, female or other gender identities are included within the term.

## Claims

1. A method for labelling a medical image, in particular a 3D reconstructed image, comprising image data of an anatomic area, the method comprising the following steps:
(a) applying a first trained neural network to the medical image to determine image coordinates of at least two, preferably three, bounding boxes (21, 22, 23) defining different predefined regions of the anatomic area;
(b) generating partial images, each partial image comprising image data of the medical image from within one of the bounding boxes (21, 22, 23);
(c) applying a different further trained neural network to each partial image in order to generate labelled partial images;
(d) based on the image coordinates of the bounding boxes (21, 22, 23), combining the labelled partial images to generate a combined labelled image of the anatomic area.

2. The method according to claim 1,
wherein the anatomic area is the cerebral arterial circle and the three predefined regions are
the posterior inferior section,
the basilar artery and its branches, and
the anterior and middle circulation of the cerebral arterial circle.

3. The method according to any one of the preceding claims, wherein the output of the different further trained neural networks is a label for the corresponding partial image data, wherein the label is applied to the partial image data to generate the labelled partial images.

4. The method according to any one of the preceding claims, comprising a further step of searching at least one of the labelled partial images or the combined labelled image for abnormalities via an algorithm and labelling the abnormalities when detected by the algorithm.

5. The method according to claim 4,
wherein abnormalities in the form of intracranial aneurysms are searched for and labelled via a trained convolutional neural network.

6. The method according to claim 4 or 5,
wherein an abnormality in the form of hypoplasia is searched for by a diameter check tool that detects places where a diameter of organs, in particular of blood vessels, is below a predefined threshold.

7. The method according to any one of claims 4 to 6,
where an abnormality in the form of an ischemic stroke is searched for by a comparing algorithm that compares a blood flow derived from the image data with an expected blood flow,
wherein, optionally, a trained convolutional network is applied to a region where an unexpectedly low blood flow has been detected by the comparing algorithm in order to determine whether there is a blood clot.

8. The method according to any one of claims 4 to 7,
wherein an abnormality in the form of a moyamoya disease is searched for by virtually dissecting the cerebral arterial circle and projecting the cross section on a 2D plane, wherein a trained convolutional neural network is applied to the projected cross section in order to detect a moyamoya disease.

9. The method according to any one of claims 4 to 8,
wherein an abnormality in the form of aplasia development disorder is searched for by applying a region growing algorithm on segmentation values of tissue in the cerebral arterial circle that is searching for discontinuities and/or circuit breaks.

10. The method according to any one of the preceding claims, wherein the different further neural networks are three-layered convolutional neural networks.

11. A method for training a neural network comprising the following steps:
(a) providing a training database comprising medical images of an anatomic area with and without bounding boxes (21, 22, 23) defining different predefined regions of the anatomic area;
(b) training the neural network with the training database generate corresponding bounding boxes (21, 22, 23) on medical images via supervised learning.

12. A method for training a neural network comprising the following steps:
(a) providing a training database comprising partial medical images of a region of an anatomic area with and without labels;
(b) training the neural network with the training database to generate corresponding labels within the region of the anatomic area.

13. A method for training a neural network comprising the following steps:
(a) providing a training database comprising medical images or partial medical images of a region of an anatomic area with abnormalities, the training database comprising medical images or partial medical images with and without labels concerning the abnormalities;
(b) training the neural network with the training database to identify the abnormalities and/or generate corresponding labels for the abnormalities within the region of the anatomic area.

14. A computer program comprising instructions which, when the program is executed by a computer cause the computer to carry out the steps of the method according to any one of claims 1 to 10.

15. An image processing device (5) for labelling a medical image comprising image data of an anatomic area, wherein the image processing device is configured to consecutively apply a plurality of trained neural networks to the image data in order to generate a labelled image of the anatomic area, in particular by applying the method according to any one of claims 1 to 10.
